# EUROPEAN PATENT SPECIFICATION

(11) **EP 3 843 288 B1**
(45) Date of publication and mention of the grant of the patent: **01.03.2023**
(21) Application number: 20216732.6
(22) Date of filing: 22.12.2020
(51) Int. Cl.: H04B 5/00

(54) **METHOD AND SYSTEM FOR WIRELESS COMMUNICATION**
VERFAHREN UND SYSTEM ZUR DRAHTLOSEN KOMMUNIKATION
PROCÉDÉ ET SYSTÈME DE COMMUNICATION SANS FIL

(30) Priority: 24.12.2019 NL 2024570
(43) Date of publication of application: 30.06.2021
(73) Proprietor: Prodrive Technologies Innovation Services B.V., 5692 EM Son en Breugel (NL)
(72) Inventor: LARISIS, Nikolaos, 5692 EM Son (NL)
(74) Representative: AWA Benelux

(56) References cited:
- US-A1- 2015 249 484
- US-A1- 2016 149 601

## Description

### Technical field

The present invention relates to a method for wireless communication in general and a method for wireless communication between nodes which are also configured to transfer electric power through inductive power transfer coils specifically. Even more specifically the present invention relates to a method for pairing a first wireless power transfer node and a second wireless power transfer node. The present invention further relates to a system for wireless communication, possibly in conjunction with wireless power transfer.

### Background Art

US 2015/0249484 A1 discloses an inductive power transfer system wherein an inductive communications channel is incorporated. However, for successful wireless communication between nodes synchronization is required. This can be achieved for instance by means of relative timing or synchronizing the clocks of the nodes one way or another, which may be cumbersome for wireless nodes.

Manchester encoding offers a solution by providing information about the clock in a single signal. Furthermore, using a predetermined starting sequence the receiving node knows when a communication starts (i.e. after a predetermined number of cycles following the reception of the pairing code). Knowing when a communication starts is vital for successful communication. Typically for wireless communication, successful communication also requires a pairing mechanism to establish that the two nodes are intended for communicating to one another. Typically, such pairing mechanism employs a pairing code known to both nodes by sharing the pairing code over an out-of-band channel.

The disadvantage of using such an encoding scheme is that it reduces the data rate relative to the bandwidth of the data signal. Furthermore, it requires a first signal comprising a starting sequence, a second signal comprising a pairing code and a third signal comprising the communicated message. Additionally, it relies on signal modulation and therefore requires measures for error detection and error correction.

### Summary of the invention

It is an object of the invention to provide a method and related system for wireless communication that solve at least some or preferably all of the disadvantages of the prior art, for instance by improving the data rate, reducing communication delays and obsoleting measures for error detection and correction, making it simpler to implement, while reducing the hardware requirements and communication related challenges.

The object is achieved by providing a method and a system as set out in the appended claims, because the synchronization occurs through prefixing a carrier signal that has a duration that matches the first time delay of communicating a signal between the first and second power transfer coils, which is inherently present when communicating between two nodes.

In an advantageous embodiment, the communication signal comprises a pairing code for pairing the first node and the second node. The pairing code is exchanged between the first and second power transfer coils. Such a pairing code for instance comprises a binary code, but preferably comprises or consists of a duration (e.g. an integer number of cycles) of a predetermined time varying magnetic field, advantageously of a predetermined and possibly fixed strength (power) level (e.g. a threshold). The pairing code is advantageously exchanged in an initial period of the communication in general, and specifically in situations wherein the pairing code comprises a duration. For instance, a first part of the communication signal consists of the pairing code. In some situations, e.g. when only pairing of a first node and second node is required, the communication signal consists of the pairing code.

The use of pairing codes is ideally suitable in situations wherein multiple nodes are present, because it allows nodes to establish which first and second nodes have connected through their respective wireless power transfer coils. For a flexible arrangement, wherein there are no unique sets of first and second nodes, it may be beneficial that one of the first and the second nodes informs the other one of the first and the second nodes of the pairing code in one of an at least one informing step, in particular through an out-of-band communication channel, preferably prior to communicating the pairing code through their respective wireless power transfer coils. Such code may be selected by one of the nodes before each communication. Advantageously, the carrier signal is prefixed to the pairing code. This ensures that the receiving coil will receive the pairing code completely.

For verification purposes, it may further be beneficial that following communicating the communication signal, one of the first and the second nodes informs the other one of the first and the second nodes in one of an at least one informing step, in particular through an out-of-band communication channel, of the content of the communication signal, for instance to establish whether the intended nodes are paired or whether the information was received without errors. Instead of informing the other node of the entire content of the communication signal, it may be beneficial to use another method of verification such as a method comprising the use of a parity bit or a checksum.

To establish which part of the electromagnetic field emitted by the power transfer coil is the identification signal or the communication signal, it is beneficial to emit such identification signal or communication signal at a predetermined power level, which may be defined as a time varying electromagnetic field having a substantially constant amplitude. The predetermined power level may be a fixed power level. However, preferably one of the first and the second nodes determines which one of the first and the second nodes then informs the other one of the first and the second nodes in one of an at least one informing step, in particular through an out-of-band communication channel of the predetermined power level. This allows a greater flexibility.

Determining the first time delay may comprise emitting an identification signal by the second power transfer coil for a second duration and capturing the identification signal by the first power transfer coil for a third duration. A difference between the second duration and the third duration represents the first time delay. This difference in the duration of emitting the identification signal and capturing the identification signal provides a simple way of obtaining information relating to all delays affecting communication which can then simply be used for synchronizing communication. This way it is not necessary to determine individual delays and/or synchronize the clocks of the nodes in the absolute sense. In a simple embodiment, the identification signal comprises or consists of the carrier signal, preferably these durations and optionally all durations described herein are defined as an integer number of periods of a time varying magnetic field.

For improving the speed of determining the first time delay, the step may comprise the second node informing the first node in one of an at least one informing step, in particular through an out-of-band communication channel, of imminent emission of the identification signal.

Preferably, determining the first time delay comprises one of the first and the second nodes informing the other one of the first and the second nodes in one of an at least one informing step, in particular through an out-of-band communication channel, of the second duration. This allows a second duration to be selected before each communication, for instance by the first or the second node. Furthermore, such embodiments allow the first node to directly establish and inform the second node of the first time delay. Alternatively, the first node may inform in one of an at least one informing step, in particular through an out-of-band communication channel, the second node of the third duration, which allows the second node to determine the first time delay. The latter alternative may also allow the first time delay to be determined for embodiments of the method according to the invention wherein neither the first or the second node informs the other node of the second duration.

Preferably, communication between the first and second power transfer coils is performed in a frequency band in which the first and second wireless power transfer coils transfer power. This allows the use of the same hardware.

In an exemplary embodiment of the method according to the invention, in each one of the above informing steps, the first and the second nodes inform one another through an out-of-band channel provided by a communicating means other than the power transfer coils, preferably such communicating means use a different physical medium for communication (e.g. sound) or use a different frequency for communication, i.e. an out-of-band channel. Furthermore, it is beneficial when such communicating means have a second time delay for informing one another shorter than the first time delay. The communicating means may for instance be based on communication technology using light (e.g. infrared) or sound (e.g. ultrasound). Preferably however, such communication means are based on radio communication technology such as Bluetooth, WIFI or RFID.

Preferably, the identification signal or the communication signal has a frequency overlapping a frequency band for power transfer between the first and second wireless power transfer coils, preferably such (in-band) signals do not comprise any modulation or encoding scheme.

In some embodiments of a method according to the invention, in particular embodiments for pairing a first and a second node, the above method steps may be succeeded by communicating through an out-of-band communication channel.

According to a second aspect of the invention the object is achieved by providing a system as set out in the appended claims. Systems as described herein comprise a first node comprising a first wireless power transfer coil, a second node comprising a second wireless power transfer coil and a controller implementing the method as described herein. The system can comprise an out-of-band communication means.

### Brief description of the figures

Fig. 1 shows a schematic representation of a wireless power transfer system comprising two nodes configured for performing wireless communication according to embodiments of the present invention.
Fig. 2 shows a diagram of a method step according to an exemplary embodiment of the invention for determining a time delay for in-band communication.
Fig. 3 shows a diagram of a method step according to an exemplary embodiment of the invention for synchronized in-band communication.

### Detailed description of embodiments

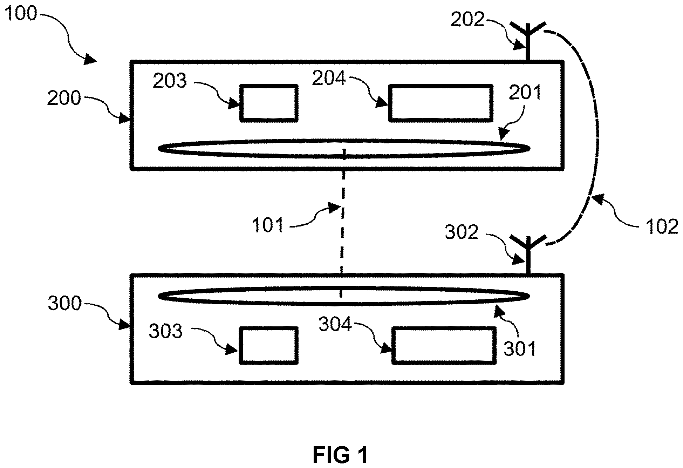

Referring to Fig. 1, a wireless power transfer system 100 comprising two nodes 200, 300 is arranged for in-band wireless communication 101 between the two nodes 200, 300 using the respective power transfer coils 201,301. The driving circuits 203, 303 of the two nodes 200, 300 are coupled to the corresponding coils 201, 301 and are configured to control the current through these coils 201, 301 such that an electromagnetic field is emitted or received, for instance for power transfer and/or in-band communication 101. The nodes may further be equipped with a controller 204, 304 configured to implement the method according to the present invention. In addition to the coils 201, 301 for in-band communication 101, the nodes 200, 300 may be equipped with an out-of-band, preferably wireless, communication means 202, 203, for instance based on radio communication technology (e.g. Bluetooth, WIFI, RFID), for out-of-band communication 102 to for instance inform one another about imminent events or exchange information relating to in-band communication. Such out-of-band communication 102 is configured for communication independently of the in-band communication 101.

The methods described herein may be used for any type of wireless charging system, but are particularly suitable for nodes of a system arranged for wireless power transfer for charging electric vehicles. Some embodiments of the present invention are particularly suitable for situations wherein the in-band communication means of two nodes, which typically require a good alignment for efficient power transfer and/or communication, are in range for in-band communication and more than two nodes are within range for out-of-band communication, which typically is less stringent with respect to spatial alignment of the communication means. In such situations the in-band communication can be used to verify whether the out-of-band communication means of the correct nodes are communicating to one another.

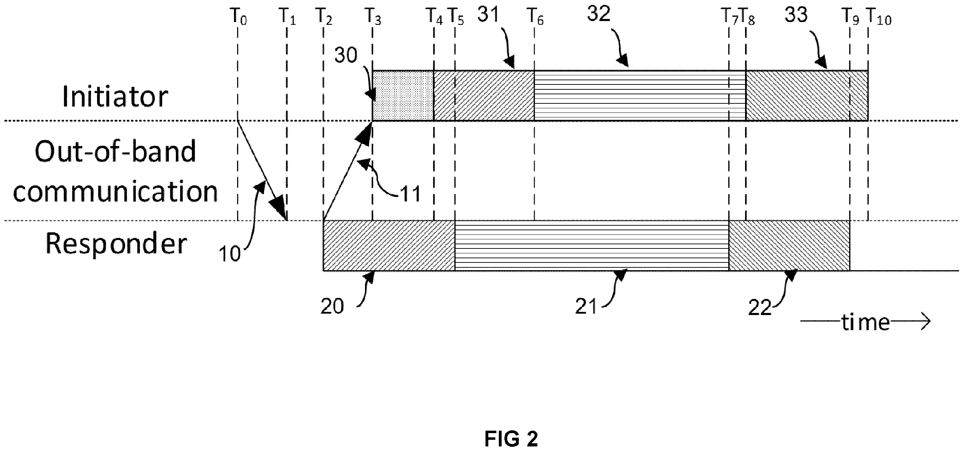

Referring to Fig. 2, for determining a time delay (T₃-T₆, T_{3'}-T_{6'}) for in-band wireless communication between for instance the power transfer coils of two nodes (see patterned blocks), a first node (e.g. initiator) may as a first step send an out-of-band communication signal 10 at T₀ to inform a second node (e.g. responder) of a request for wireless communication, for instance for pairing the first and the second node. This out-of-band communication signal 10 may further comprise information with respect to a pairing code to be exchanged. The information can be representative of one or more of: a threshold regarding the minimum power level for in-band communication, a time duration of the in-band signal (e.g., representative of an integer number of periods for which the responder will emit the in-band signal), and a code for pairing the first node and the second node. Subsequently, the second node (e.g. responder) receives the out-of-band communication signal atTi.

Subsequently, at T₂ the second node informs the first node (e.g. initiator) via an out-of-band communication signal 11 of imminent emission of an in-band signal 21 by the second node. The out-of-band communication signal 11 may further comprise information regarding a duration (i.e. T₇-T₅) of emitting the in-band signal 21 above the threshold by the second node (if not already communicated with out-of-band communication signal 10). Within a known time frame of emitting the out-of-band signal 11 informing the first node at T₂, preferably simultaneously or shortly after emission of out-of-band communication signal 11, the strength of the emitted in-band signal of the power transfer coil of the second node is ramped up 20 for emitting the in-band identification signal 21 at a level above the threshold. At T₃, the first node receives the information 11 via the out-of-band channel. After some initial delays (e.g. computation delays) 30 the first node starts preparing 31 the in-band communication means (e.g. ramping up the wireless power transfer coil) at T₄ for receiving a part 32 of the in-band identification signal 21.

Meanwhile, following ramping up 20 the power transfer coil of the second node, the identification signal 21 is emitted by the second node at T₅. After delays 30, 31 for preparing the first node and its in-band communication means for receiving 32 the in-band identification signal emitted 21 by the second node, the first node at T₆ starts receiving a part 32 of the in-band identification signal 21. The in-band identification signal 21 is preferably emitted without any modulation or encoding scheme.

Subsequently, the second node stops emitting the in-band identification signal 21 at T₇ by ramping down 22 its in-band communication means to a signal level below the threshold. After some delay at T₈ this is detected by the first node, which may also initiate the ramp down 33 of its in-band communication means. The ramp down 22, 33 of the in-band communication means of the first node and second node finish at T₁₀ and T₉, respectively.

The time delay for in-band communication, being the difference between the duration T₅ to T₇ and T₆ to T₈, may be determined by exchanging information regarding the duration (e.g. number of cycles) of T₆ to T₈ and/or T₅ to T₇ between the first node and the second node (e.g. through out-of-band communication). For instance, the first node may inform the second node through an out-of-band communication (e.g. 12) of the duration of the received part 32 of the identification signal 21, which allows the first node to determine the time delay. Alternatively, the first node may for instance choose a duration of the identification signal 21 and inform the second node of this duration through an out-of-band communication signal (e.g. 10). This way the first node can subsequently determine the time delay for in-band communication following the reception of the part 32 of the in-band identification signal 21 and send this information to the second node through an out-of-band communication (e.g. 12).

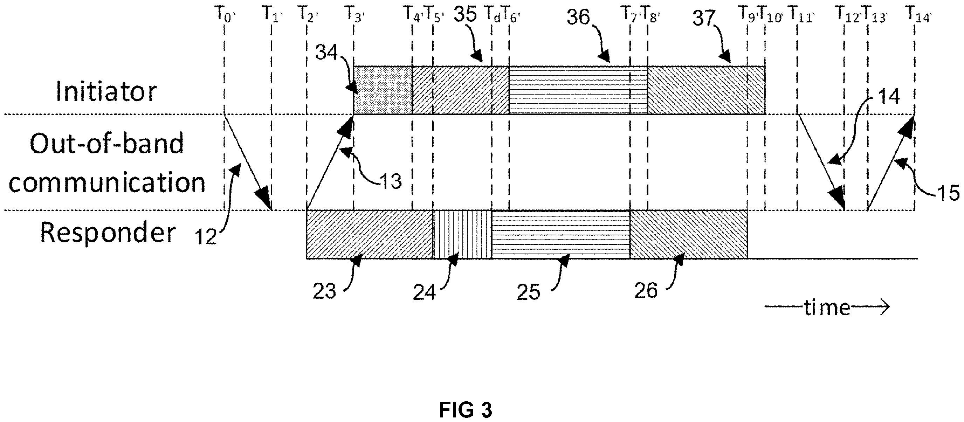

Referring to Fig. 3, during the step of (synchronized) in-band communication the first node may at T_{0'} request the second node to initiate the communication through an out-of-band communication signal 12. This signal 12 will be received by the second node at T_{1'} similar to the events described for T₀ and T₁. The subsequent events of T_{2'} to T_{5'} are similar to the event of T₂ to T₅, with the exception that the preparations of the second node during this phase relate to the communication (in a synchronized manner) instead of to the preparations relating to determining the time delay.

After the ramp up 23 of the in-band communication means of the second node has finished at T_{5'}, the in-band communication means of the second node emit a carrier signal 24 prior to emitting the communication 25. This carrier signal 24 has the same duration as the time delay for in-band communication. Alternatively, the duration may be longer as long as the additional duration is taken into account when receiving the in-band communication signal 36. This can for instance be achieved in situations where the additional delay is known to the first node and the first node delays the reception of the in-band communication signal 36 for a duration which is the same as the additional delay.

The carrier signal 24 is immediately followed by the in-band communication signal 25 at T_{d}, which communication signal will be received 36 by the first node after a delay relating to the physical medium used for communication at T_{6'}. The in-band communication signal 25 emitted by the second node is now completely received 36 by the first node and consequently the in-band communication between the first and the second node is synchronized. The first part of the communication signal 25 may comprise pairing information for instance exchanged at an earlier stage between the first and second nodes through out-of-band communication (e.g. 10, 11, 12, 13). Alternatively, the communication signal 25 consists solely of the pairing information, being a duration or a number of periods of a time varying magnetic field. The in-band communication signal 25 is preferably emitted without any modulation or encoding scheme.

After emitting the communication signal 25, the in-band communication means of the second node ramp down 26 at T_{7'}. This will be detected at T_{8'} by the in-band communication means of the first node, which will then also ramp down 37. The ramp down 26, 37 of the in-band communication means of the first node and second node finish at T_{10'} and T_{9'}, respectively.

The communication process may be concluded by verifying the communication, for instance comprising or consisting of pairing information, through the out-of-band communication means of the first and second nodes. For instance, the first node may inform 14 the second node of the received information and the second node may inform 15 the first node if the received information is correct.

It will be obvious to the person skilled in the art that the indications first node and the second node per step correspond to the indications shown in the figures, but may in some cases be switched from one step to the other step. For instance, the second node may initiate the first optional step and inform the first node of an imminent determination of an in-band communication delay. It will be further obvious to the skilled person that indications such as ramping up relate to driving circuits 203, 303 driving the respective coils 201, 301 up to a level wherein the identification signal or communication signal is above a threshold and that indications such as ramping down relate to driving circuits 203, 303 driving the respective coils 201, 301 down from a level wherein the identification signal or communication signal is below a threshold towards for instance an idle state.

## Claims

1. Method for wireless communication between a first wireless power transfer coil (201) of a first node (200) and a second wireless power transfer coil (301) of a second node (300), the method comprising:
communicating (101) a communication signal (25) between the first and the second power transfer coils (201, 301) by generating a magnetic field (20, 21, 22) by one of the first and second power transfer coils (201, 301) and receiving the magnetic field (31, 32, 33) in the other one of the first and second power transfer coils (201, 301),
**characterised in that** the method comprises:
determining a first time delay (T₃-T₆) for communicating (101) between the first and second power transfer coils (201, 301), and
prefixing a carrier signal (24) having a first duration (T_{5'}-T_{d}) equal to or larger than the first time delay (T₃-T₆) to the communication signal (25).

2. Method of claim 1, wherein the communication signal (25) comprises or consists of a pairing code for pairing the first node (200) and the second node (300).

3. Method of claim 2, wherein in one of an at least one informing step (10, 11, 12, 13, 14, 15) one of the first and the second nodes (200, 300) informs (102) the other one of the first and the second nodes (200, 300) of the pairing code, preferably wherein prior to communicating (101) the communication signal (25) one of the first and the second nodes (200, 300) informs (102) the other one of the first and the second nodes (200, 300) of the pairing code, preferably wherein the pairing code preferably comprises one or more of a signal duration and a signal strength.

4. Method of any one of the previous claims, wherein in one of an at least one informing step (10, 11, 12, 13, 14, 15) following communicating (101) the communication signal (25), one of the first and the second nodes (200, 300) informs (102) the other one of the first and the second nodes (200, 300) of the communication for verification.

5. Method of any one of the preceding claims, wherein determining the first time delay (T₃-T₆) comprises emitting an identification signal (21) by the second power transfer coil (201) for a second duration (T₅-T₇) and capturing the identification signal (32) by the first power transfer coil (301) for a third duration (T₆-T₈), wherein the first duration (T_{5'}-T_{d}) represents a difference between the second duration (T₅-T₇) and the third duration (T₆-T₈), preferably wherein the identification signal (21) consists of a waveform corresponding to the carrier signal (24).

6. Method of claim 5, wherein determining the first time delay (T₃-T₆) comprises the second node (200) informing the first node (300) in one of an at least one informing step (11) of imminent emission of the identification signal (21).

7. Method of claim 5 or 6, wherein determining the first time delay (T₃-T₆) comprises one of the first and the second nodes (200, 300) informing (102) the other one of the first and the second nodes (200, 300) in one of an at least one informing step (12, 13) of the second duration (T₅-T₇).

8. Method of any one of claims 5 to 7, wherein determining the first time delay (T₃-T₆) comprises the first node (300) informing (102) the second node (200) in one of an at least one informing step (12, 13) of the third duration (T₆-T₈).

9. Method of any one of claims 5 to 8, wherein the identification signal (21) is emitted at a predetermined power level, preferably wherein the identification signal (21) and the communication signal (25) are emitted at a predetermined power level, even more preferably wherein emitting at the predetermined power level comprises having a substantially constant amplitude.

10. Method of claim 9, wherein one of the first and the second nodes (200, 300) informs the other one of the first and the second nodes (200, 300) in one of an at least one informing step (10, 11) of the predetermined power level.

11. Method of any one of claims 5 to 10, wherein each of the first (T₃-T₆), second (T₅-T₇) and third (T₆-T₈) duration is defined by an integer number of periods of a time varying magnetic field.

12. Method of any one of claims 5 to 11, wherein the identification signal (21) or the communication signal (25) has a frequency overlapping a frequency band for power transfer between the first and second wireless power transfer coils (201, 301).

13. Method of any one of claims 5 to 12, wherein the communication signal (25) and/or optionally the identification signal (21) does not comprise any modulation or encoding scheme.

14. Method of any one of the preceding claims, wherein the first and the second nodes (200, 300) inform one another in each one of the at least one informing step through a communicating means (202, 302) other than the power transfer coils (201, 301), preferably wherein the communicating means has a second time delay (T₀-T₁, T₂-T₃, T_{0'}-T_{1'}, T_{2'}-T_{3'}, T_{11'}-T_{12'}, T_{13'}-T_{14'}) for informing one another shorter than the first time delay, more preferably wherein the communicating means employs a radio communication technology.

15. System comprising a first node (300) comprising a first wireless power transfer coil (301), a second node (200) comprising a second wireless power transfer coil (201) and a controller (203) implementing the method of any one of the preceding claims.

## Patentansprüche

1. Verfahren zur drahtlosen Kommunikation zwischen einer ersten drahtlosen Energieübertragungsspule (201) eines ersten Knotens (200) und einer zweiten drahtlosen Energieübertragungsspule (301) eines zweiten Knotens (300), wobei das Verfahren umfasst:
Übermitteln (101) eines Kommunikationssignals (25) zwischen der ersten und zweiten Energieübertragungsspule (201, 301) durch Erzeugen eines Magnetfeldes (20, 21, 22) durch eine der ersten und zweiten Energieübertragungsspulen (201, 301) und Empfangen des Magnetfeldes (31, 32, 33) in der anderen der ersten und zweiten Energieübertragungsspulen (201, 301),
**dadurch gekennzeichnet, dass** das Verfahren umfasst:
Bestimmen einer ersten Zeitverzögerung (T₃-T₆) zum Kommunizieren (101) zwischen der ersten und zweiten Energieübertragungsspule (201, 301) und
Voranstellen eines Trägersignals (24) einer ersten Dauer (T_{5'}-T_{d}), die größer oder gleich der ersten Zeitverzögerung (T₃-T₆) ist, zum Kommunikationssignal (25).

2. Verfahren nach Anspruch 1, wobei das Kommunikationssignal (25) einen Kopplungscode zur Verbindung des ersten Knotens (200) und des zweiten Knotens (300) umfasst oder aus diesem besteht.

3. Verfahren nach Anspruch 2, wobei in einem von mindestens einem Mitteilungsschritt (10, 11, 12, 13, 14, 15) einer der ersten und zweiten Knoten (200, 300) dem anderen der ersten und zweiten Knoten (200, 300) den Kopplungscode mitteilt (102), wobei vorzugsweise vor dem Übermitteln (101) des Kommunikationssignals (25) einer der ersten und zweiten Knoten (200, 300) dem anderen der ersten und zweiten Knoten (200, 300) den Kopplungscode mitteilt (102), wobei der Kopplungscode vorzugsweise mindestens eine einer Signaldauer und einer Signalstärke umfasst.

4. Verfahren nach irgendeinem der vorstehenden Ansprüche, wobei in einem von mindestens einem Mitteilungsschritt (10, 11, 12, 13, 14, 15) im Anschluss an die Übermittlung (101) des Kommunikationssignals (25) einer der ersten und zweiten Knoten (200, 300) dem anderen der ersten und zweiten Knoten (200, 300) die Übermittlung zwecks Verifizierung mitteilt (102).

5. Verfahren nach irgendeinem der vorstehenden Ansprüche, wobei das Bestimmen der ersten Zeitverzögerung (T₃-T₆) das Abgeben eines Erkennungssignals (21) durch die zweite Energieübertragungsspule (201) für eine zweite Dauer (T₅-T₇) und das Erfassen des Erkennungssignals (32) durch die erste Energieübertragungsspule (301) für eine dritte Dauer (T₆-T₈) umfasst, wobei die erste Dauer (T_{5'}-T_{d}) einen Unterschied zwischen der zweiten Dauer (T₅-T₇) und der dritten Dauer (T₆-T₈) darstellt, wobei das Erkennungssignal (21) vorzugsweise aus einer dem Trägersignal (24) entsprechenden Wellenform besteht.

6. Verfahren nach Anspruch 5, wobei das Bestimmen der ersten Zeitverzögerung (T₃-T₆) umfasst, dass der zweite Knoten (200) in einem von mindestens einem ersten Mitteilungsschritt (11) dem ersten Knoten (300) die bevorstehende Abgabe des Erkennungssignals (21) mitteilt.

7. Verfahren nach Anspruch 5 oder 6, wobei das Bestimmen der ersten Zeitverzögerung (T₃-T₆) umfasst, dass einer der ersten und zweiten Knoten (200, 300) in einem von mindestens einem Mitteilungsschritt (12, 13) dem anderen der ersten und zweiten Knoten (200, 300) die zweite Dauer (T₅-T₇) mitteilt (102).

8. Verfahren nach irgendeinem der Ansprüche 5 bis 7, wobei das Bestimmen der ersten Zeitverzögerung (T₃-T₆) umfasst, dass der erste Knoten (300) in einem von mindestens einem Mitteilungsschritt (12, 13) dem zweiten Knoten (200) die dritte Dauer (T₆-T₈) mitteilt (102).

9. Verfahren nach irgendeinem der Ansprüche 5 bis 8, wobei das Erkennungssignal (21) bei einem vorgegebenen Leistungspegel abgegeben wird, wobei das Erkennungssignal (21) und das Kommunikationssignal (25) vorzugsweise bei einem vorgegebenen Leistungspegel abgegeben werden, wobei das Abgeben beim vorgegebenen Leistungspegel besonders bevorzugt das Aufweisen einer im Wesentlichen konstanten Amplitude umfasst.

10. Verfahren nach Anspruch 9, wobei einer der ersten und zweiten Knoten (200, 300) in einem von mindestens einem Mitteilungsschritt (10, 11) dem anderen der ersten und zweiten Knoten (200, 300) den vorgegebenen Leistungspegel mitteilt.

11. Verfahren nach irgendeinem der Ansprüche 5 bis 10, wobei die erste (T₃-T₆), zweite (T₅-T₇) und dritte (T₆-T₈) Dauer jeweils durch eine ganzzählige Anzahl Perioden eines zeitlich veränderlichen Magnetfeldes definiert sind.

12. Verfahren nach irgendeinem der Ansprüche 5 bis 11, wobei das Erkennungssignal (21) oder das Kommunikationssignal (25) eine Frequenz aufweist, die sich mit einem Frequenzband für die Energieübertragung zwischen der ersten und zweiten drahtlosen Energieübertragungsspulen (201, 301) überlappt.

13. Verfahren nach irgendeinem der Ansprüche 5 bis 12, wobei das Kommunikationssignal (25) und/oder wahlweise das Erkennungssignal (21) kein Modulations- oder Codierungsschema umfasst.

14. Verfahren nach irgendeinem der vorstehenden Ansprüche, wobei der erste und zweite Knoten (200, 300) in jedem des mindestens einen Mitteilungsschritts einander über ein anderes Kommunikationsmittel (202, 302) als die Energieübertragungsspulen (201, 301) Mitteilungen senden, wobei das Kommunikationsmittel vorzugsweise eine zweite Zeitverzögerung (T₀-T₁, T₂-T₃, T_{0'}-T_{1'}, T_{2'}-T_{3'}, T_{11'}-T_{12'}, T_{13'}-T_{14'}) zum Versenden von Mitteilungen aneinander aufweist, die kürzer ist als die erste Zeitverzögerung, wobei das Kommunikationsmittel besonders bevorzugt eine Funkkommunikationstechnologie einsetzt.

15. System, umfassend einen eine erste drahtlose Energieübertragungsspule (301) umfassenden ersten Knoten (300), einen eine zweite drahtlose Energieübertragungsspule (201) umfassenden zweiten Knoten (200) und eine Steuerung (203), die das Verfahren nach irgendeinem der vorstehenden Ansprüche implementiert.

## Revendications

1. Procédé de communication sans fil entre une première bobine de transfert de puissance sans fil (201) d'un premier noeud (200) et une seconde bobine de transfert de puissance sans fil (301) d'un second noeud (300), le procédé comprenant l'étape ci-dessous consistant à :
communiquer (101) un signal de communication (25) entre les première et seconde bobines de transfert de puissance sans fil (201, 301) en générant un champ magnétique (20, 21, 22) par l'une des première et seconde bobines de transfert de puissance sans fil (201, 301) et en recevant le champ magnétique (31, 32, 33) dans l'autre des première et seconde bobines de transfert de puissance sans fil (201, 301) ;
**caractérisé en ce que** le procédé comprend les étapes ci-dessous consistant à :
déterminer un premier retard de temps (T₃-T₆) pour communiquer (101) entre les première et seconde bobines de transfert de puissance sans fil (201, 301) ; et
préfixer un signal porteur (24), présentant une première durée (T_{5'}-T_{d}) égale ou supérieure au premier retard de temps (T₃-T₆), au signal de communication (25).

2. Procédé selon la revendication 1, dans lequel le signal de communication (25) comprend ou consiste en un code d'appariement pour apparier le premier noeud (200) et le second noeud (300).

3. Procédé selon la revendication 2, dans lequel, dans l'une d'au moins une étape d'information (10, 11, 12, 13, 14, 15), l'un des premier et second noeuds (200, 300) informe (102) l'autre des premier et second noeuds (200, 300) du code d'appariement, de préférence dans lequel, avant de communiquer (101) le signal de communication (25), l'un des premier et second noeuds (200, 300) informe (102) l'autre des premier et second noeuds (200, 300) du code d'appariement, de préférence dans lequel le code d'appariement comprend de préférence un ou plusieurs éléments parmi une durée de signal et une intensité de signal.

4. Procédé selon l'une quelconque des revendications précédentes, dans lequel, dans l'une d'au moins une étape d'information (10, 11, 12, 13, 14, 15) suivant la communication (101) du signal de communication (25), l'un des premier et second noeuds (200, 300) informe (102) l'autre des premier et second noeuds (200, 300) de la communication, à des fins de vérification.

5. Procédé selon l'une quelconque des revendications précédentes, dans lequel déterminer le premier retard de temps (T₃-T₆) comprend l'étape consistant à émettre un signal d'identification (21), par le biais de la seconde bobine de transfert de puissance sans fil (201), pendant une deuxième durée (T₅-T₇), et l'étape consistant à capturer le signal d'identification (32) par le biais de la première bobine de transfert de puissance sans fil (301) pendant une troisième durée (T₆-T₈), dans lequel la première durée (T_{5'}-T_{d}) représente une différence entre la deuxième durée (T₅-T₇) et la troisième durée (T₆-T₈), de préférence dans lequel le signal d'identification (21) consiste en une forme d'onde correspondant au signal porteur (24).

6. Procédé selon la revendication 5, dans lequel déterminer la première durée (T₃-T₆) comprend l'étape dans laquelle le second noeud (200) informe le premier noeud (300), dans l'une d'au moins une étape d'information (11), de l'émission imminente du signal d'identification (21).

7. Procédé selon la revendication 5 ou 6, dans lequel déterminer le premier retard de temps (T₃-T₆) comprend l'étape dans laquelle l'un des premier et second noeuds (200, 300) informe (102) l'autre des premier et second noeuds (200, 300), dans l'une d'au moins une étape d'information (12, 13), de la deuxième durée (T₅-T₇).

8. Procédé selon l'une quelconque des revendications 5 à 7, dans lequel l'étape de détermination du premier retard de temps (T₃-T₆) comprend l'étape dans laquelle le premier noeud (300) informe (102) le second noeud (200), dans l'une d'au moins une étape d'information (12, 13), de la troisième durée (T₆-T₈).

9. Procédé selon l'une quelconque des revendications 5 à 8, dans lequel le signal d'identification (21) est émis à un niveau de puissance prédéterminé, de préférence dans lequel le signal d'identification (21) et le signal de communication (25) sont émis à un niveau de puissance prédéterminé, et encore plus préférablement dans lequel l'étape d'émission, au niveau de puissance prédéterminé, consiste à disposer d'une amplitude sensiblement constante.

10. Procédé selon la revendication 9, dans lequel l'un des premier et second noeuds (200, 300) informe l'autre des premier et second noeuds (200, 300), dans l'une d'au moins une étape d'information (10, 11), du niveau de puissance prédéterminé.

11. Procédé selon l'une quelconque des revendications 5 à 10, dans lequel chacune des première (T₃-T₆), deuxième (T₅-T₇) et troisième (T₆-T₈) durées est définie par un nombre entier de périodes d'un champ magnétique variable dans le temps.

12. Procédé selon l'une quelconque des revendications 5 à 11, dans lequel le signal d'identification (21) ou le signal de communication (25) présente une fréquence chevauchant une bande de fréquence pour un transfert de puissance entre les première et seconde bobines de transfert de puissance sans fil (201, 301).

13. Procédé selon l'une quelconque des revendications 5 à 12, dans lequel le signal de communication (25) et/ou, facultativement le signal d'identification (21), ne comprend, ou ne comprennent, aucun schéma de modulation ou de codage.

14. Procédé selon l'une quelconque des revendications précédentes, dans lequel les premier et second noeuds (200, 300) s'informent mutuellement dans chacune de ladite au moins une étape d'information, par l'intermédiaire d'un moyen de communication (202, 302), distinct des bobines de transfert de puissance sans fil (201, 301), de préférence dans lequel le moyen de communication présente un second retard de temps (T₀-T₁, T₂-T₃, T_{0'}-T_{1'}, T_{2'}-T_{3'}, T_{11'}-T_{12'}, T_{13'}-T_{14'}), pour s'informer mutuellement, lequel est plus court que le premier retard de temps, plus préférablement dans lequel le moyen de communication emploie une technologie de radiocommunication.

15. Système comprenant un premier noeud (300) comprenant une première bobine de transfert de puissance sans fil (301), un second noeud (200) comprenant une seconde bobine de transfert de puissance sans fil (201), et un contrôleur (203) mettant en oeuvre le procédé selon l'une quelconque des revendications précédentes.
